# EUROPEAN PATENT SPECIFICATION

(11) **EP 2 076 995 B1**
(45) Date of publication and mention of the grant of the patent: **16.03.2016**
(21) Application number: 07823116.4
(22) Date of filing: 22.10.2007
(51) Int. Cl.: H04L 9/00, H04L 9/32

(54) **METHOD AND SYSTEM FOR A SECURE PKI (PUBLIC KEY INFRASTRUCTURE) KEY REGISTRATION PROCESS ON MOBILE ENVIRONMENT**
VERFAHREN UND SYSTEM FÜR EINEN SICHEREN SCHLÜSSELREGISTRATIONSPROZESS EINER PKI (INFRASTRUKTUR ÖFFENTLICHER SCHLÜSSEL) IN EINER MOBILUMGEBUNG
PROCÉDÉ ET SYSTÈME POUR PROCESSUS D'ENREGISTREMENT DE CLÉS DE ICP (INFRASTRUCTURE À CLÉS PUBLIQUES) SÉCURISÉ DANS UN ENVIRONNEMENT MOBILE

(30) Priority: 23.10.2006 FI 20060929
(43) Date of publication of application: 08.07.2009
(73) Proprietor: Valimo Wireless OY, 00270 Helsinki (FI)
(72) Inventor: HEINONEN, Petteri, 02600 Espoo (FI); WEBSTER, Michael Alexander, 00170 Helsinki (FI); LINDSTRÖM, Juha, 02610 Espoo (FI)
(74) Representative: Berggren Oy Ab
(86) International application number: PCT/FI2007/000256
(87) International publication number: WO 2008/049960

(56) References cited:
- WO-A-01/20431
- US-A- 6 167 518
- US-A1- 2003 204 734
- US-A1- 2006 047 960
- NYSTROM M, KALISKI B, RSA SECURITY: "PKCS #10: Certification Request Syntax Specification Version 1.7; rfc2986.txt" IETF STANDARD, INTERNET ENGINEERING TASK FORCE, IETF, CH, 1 November 2000 (2000-11-01), pages 1-15, XP015008769 ISSN: 0000-0003

## Description

### TECHNICAL FIELD OF THE INVENTION

The invention relates to method and system for a secure PKI (Public Key Infrastructure) key registration process on a mobile environment, and especially on a WPKI (Wireless PKI) environment comprising a registration server and a client, such as a terminal. Especially the invention relates to a registration method, where a registration request for a public key of a key pair generated in the terminal is provided to the registration server in order to be registered. Still the invention is applicable not only for keys generated on the terminal, SIM, UICC, or hardware module (tamper resistance), but also for pre-generated keys, such as keys stored during manufacturing or personalization of the terminal, SIM, UICC, and/or hardware module (client).

### BACKGROUND OF THE INVENTION

In order to being identified in a WPKI (Wireless PKI) environment a user should have a certain identification certificate including PKI public key (and corresponding private key stored securely) used for signing and opening messages sent by the user, for example. It is known from the prior art to provide a PKI key pair beforehand for example by a manufacturer of the terminal, or SIM/UICC-card (SIM stands for Subscriber Identity Module, and UICC for Universal Integrated Circuit Card) of the terminal, if the key pair of SIM/UICC-card is used, as well also to generate keys "on-board". It is also known to use secured transmission path between the OTA server (Over The Air) and SIM-card when delivering a key pair to the SIM-card. When the manufacturer generates the key pair or just a key (private PKI key or a symmetric key), the public key of the key pair can be registered and connected to the user identification information reliably when the user is known when the key pair is stored in his/her terminal or the terminal with the key pair is given to the user, for example.

However, nowadays situations where a PKI key pair should be generated by a client, such as a terminal or by some component in the terminal (such as SIM/UICC-card) not until needed are become more general, such as also situations where pre-generated keys are not registered until need. To be reliable the public key of the generated key pair should be registered with a certification authority, such as a mobile operator, bank or government agency.

Prior art solutions have however some disadvantages namely when the new key pair is needed the user should bring his/her terminal to the trusted party, such as a certification authority, to generate the new key pair and register it trustworthy. This is a clear drawback. In addition, certain Man-In-The-Middle attacks are possible if transmission connection between the terminal and the certification authority, such as a registration server, is not secured, whereupon identity information or information relating to generated key pair can be stolen, and therefore the registration of the public key, for example, is not trustworthy. Securing the transmission connection is not always possible.

Document US2006/0047960 relates to a session control system, where a communication device is in communication with a session control server, which enables a session with another communication device. The session control server comprises a unit for generating an asymmetric key pair and a requesting unit for requesting the issuance of a certificate for a public key in said asymmetric key pair, to said session control server. In combination with the issuance request, a request for registration of the location of said communication device is sent.

The document "PKCS #10: Certification Request Syntax Specification Version 1.7", November 2000, discloses the content of a certification request, as well as the certification syntax and the components of a certification request.

### SUMMARY OF THE INVENTION

An object of the invention is to provide a method and system for a secure PKI (Public Key Infrastructure) key registration process in a WPKI (Wireless PKI) environment comprising a registration server for registering keys and a client, such as a terminal requesting a registration of a key pair, and minimize the possibility to Man-In-The-Middle attacks, when the key information is delivered between the client and registration server, whether the key or key pair is generated by the client (on-board-generation) or is pre-generated (pre-generated for example by the manufacturer of the terminal, but not yet registered). Moreover an additional object of the invention is to minimize the data to be transmitted between the registration server and the client.

The object of the invention is fulfilled by providing a client requesting a registration of a key pair with a first and second part information, where said second part information and at least part of said first part information is used for a registration request with a public key to be registered, over which a verifying code, such as a hash code is determined, and after which the determined hash code and the public key to be registered is delivered to the registration server without said first and/or second information.

The present invention relates to a method of claim 1 and system of claim 15. In addition the present invention relates to a registration server of claim 21, terminal of claim 23, and a computer program products of claims 24 and 25.

In this document a client means a terminal, or, SIM, UICC, or hardware module (like trusted flash or embedded chip), which is tamper resistance and/or tamper proof, or other tamper resistance means typically used in the terminal. Moreover it should be noted that a key or key pair to be registered is generated by the client ("on-board"), but the key or key pair could also be pre-generated apart from the client, such as by the manufacturer of the client (terminal, SIM, UICC or hardware module) after which the client is provided with the pre-generated key and/or keys, and finally, when needed, a registration of the key (and/or keys) is requested by said client. The client may also be implemented by a circuit or computer program product comprising software code means typically run on the terminal, such as on a computer or a mobile phone.

In more details a public key of a key pair (including private and public keys) by which the client is provided must be registered at a registration server of a certification authority, for example. The registration server advantageously sends first information usable for forming a registration request to the client. First information may be random character string, proof of possession, user-specific information or combination of these, for example, and at least part of it is typically encrypted before sending. Encrypting is advantageously done using a public key of the client, where the public key used has been provided to the client beforehand for example by a manufacturer of the terminal, or SIM/UICC-card, or by an operator. Encryption is also typically done using asymmetric keys, and for example RSA-algorithm. Moreover first information is advantageously sent via a first data communication connection established between the registration server and terminal.

When said first information is received a possible encrypted part of it is decrypted by said client using it's private key.

Furthermore the client is also provided by second information used for forming the registration request. Said second information may be environment data of the client, and/or information sent from the outside of the client, such as information sent via a second data communication connection separated from the first data communication connection used for transmitting said first information. Second information may be proof of possession or a challenge password, but may also be any other information, such as a random character string known also by the registration server. According to an embodiment of the invention said second information may be a combination of at least data or information described above, such as combination of environment data and information sent by the registration server. In addition said second information or at least part of it can contain Luhn checksum or any other checksum and local validity check of the second information can be done.

After receiving said first and second information and generating a key pair, a registration request is formed combining said second part of information, at least part of said first information, and a public key of the generated (or pre-generated) key pair to be registered. Combination may be for example a string or table or some other form, where first and second information and the public key are provided in a certain order, such as successively, after which a verifying code is determined of the combination. The verifying code, which is advantageously a hash code of the combination, is advantageously determined using a one-way algorithm, such as a SHA-1 or SHA-2, MD5, RIPEMD, RIPEMD-160, (RIPEMD-128, RIPEMD-256, and RIPEMD-320), Tiger, or WHIRLPOOL algorithm. However, the registration server also knows the part of said first information used for combination, as well as said second information and the structure of the combination (string or table, for example) and a verifying code determination method.

When the verifying code is determined of the combination, the verifying code is advantageously signed using the private key of the key pair which public key to be registered is just delivered to the registration server. However the signing may also be optional, even though this (not signing) is very un-usual.

Next the (possibly) signed verifying code and public key are delivered to the registration server via a third communication connection, which is according to an embodiment of the invention same as the first communication connection. However, it is to be noted that the third communication connection can also be separated from the first communication connection.

In addition, according to an embodiment of the invention the third data communication connection is unsecured connection, whereas the first data communication connection is secured.

When the registration server receives the (possibly signed) verifying code and public key, it (encrypts said possibly signed verifying code and) combines similar string or table or other combination of said first and second information and the public key received as the client did, and determines a verifying code over that combination using similar method as the client used, after which the registration server compares the verifying code determined by it itself to the verifying code received from the client and if these two verifying codes are identical, the registration server registers said public key received from the client.

According to a further embodiment of the invention a certain time window is triggered during which the verifying code and the public key to be registered must be received in the registration server in order to be registered. Otherwise the registration request is automatically refused in the registration server. The delivery of first information can be used for triggering the certain time window, for example.

By sending only the (possibly signed) verifying code and public key (forming a registration request) instead of sending also first and/or second information together with the public key a loading of a communication system used for data transmission between the client and registration server can be reduced. It should also be noted that when first (and possibly also second) information is encrypted before delivering to the client third parties couldn't determine the verifying code as determined by the client because they do not have first and/or second information with the public key, of which combination the verifying code is determined by the client.

For example if the third party wants to send his/her key to the registration server by stealing the verifying code and public key of the original user, and replacing the public key of the original user by his/her own public key, the registration server will recognize this because verifying codes wouldn't be identical, namely the verifying code determined by the registration server using first and second information delivered to the client with the public key of the third party would not be identical to the verifying code determined by the client. On the other hand if the third party determines a new verifying code using his/her public key, the registration server will still recognize this because the third party does not have first and second information used for determination of the verifying code in the client. This is an additional reason why first and second information are not delivered with the verifying code and/or public key to the registration server.

According to an embodiment of the invention also information gathered from the environment of the client can be used as second information or at least part of second information when determining a verifying code, such as client's serial number, information of an application or computer program product run on the terminal and/or information of SIM/UICC-card of the terminal and/or IMEI and/or IMSI and/or processor's ID number and/or terminal's uniquely identifying code and/or ICCID. A possibility is also to ask certain information from the user of the terminal. However, information above should also be known by the registration server in order to determine correct verifying code. Some information, which is not know to the registration server beforehand needs also to be transmitted from client to the registration server on the 3^{rd} communication or using some other means.

Said first information comprises advantageously a greater number of characters than said second information, which is typically only 8 bytes or characters, but not limited to 8 bytes or characters. Said second information may also comprise information about user name, address, ID-number, social security number or the like, and/or name of the user's company.

According to an embodiment of the invention a PIN-code can be asked from the user in order to activate decryption / encryption / signing, or generation of a new key pair. In an embodiment the PIN-code can also be taken into account when determining a verifying code.

In addition according to an embodiment of the invention the client is a SIM or UICC-card, a terminal, such as a mobile phone or portable computer comprising a SIM and/or UICC-card. Moreover it should be noted that even if this document states a client like a terminal used for generating and/or at least requesting a registration of a key pair and determining a verifying code, also a computer program product run on the terminal may perform these steps according to an embodiment of the invention. The computer program product is advantageously stored or at least performed at least partly on a SIM and/or UICC-card of the terminal. According to a further embodiment of the invention also SIM and/or UICC-card of the terminal can be at least partly used for generating and/or at least requesting a registration of a key pair and determining a verifying code over the combination of said first and second information and a key to be registered.

The present invention offers remarkable advantages over the known prior art solutions, because using the invention one can generate new PKI key pairs and register them at anytime needed, or request a registration of pre-generated key, without a great fear about the Man-In-The-Middle attacks. In addition the invention makes possible to reduce a loading of used communication systems, because only a verifying code and public key is needed to deliver. Furthermore the invention is also powerful even if the third communication connection between a client and registration server is unsecured.

### BRIEF DESCRIPTION OF THE DRAWINGS

Next the invention will be described in greater detail with reference to exemplary embodiments in accordance with the accompanying drawings, in which
- Figure 1A: illustrates a flow chart of an exemplary method for forming a registration request in a terminal according to an advantageous embodiment of the invention,
- Figure 1B: illustrates flow chart of an exemplary method for registering a key in a registration server according to an advantageous embodiment of the invention,
- Figure 2: illustrates a block diagram of an exemplary system for a key registration process in a WPKI environment comprising a registration server and a terminal according to an advantageous embodiment of the invention,
- Figure 3: illustrates an exemplary terminal for a key registration process in a WPKI environment according to an advantageous embodiment of the invention,

- Figure 4: illustrates an exemplary SIM/UICC-card for a key registration process in a WPKI environment according to an advantageous embodiment of the invention,
- Figure 5: illustrates a block diagram of an exemplary registration server for registering a key according to an advantageous embodiment of the invention,
- Figure 6A: illustrates a block diagram of an exemplary computer program product for forming a registration request in a terminal according to an advantageous embodiment of the invention, and
- Figure 6B: illustrates a block diagram of an exemplary computer program product for registering a key in a registration server according to an advantageous embodiment of the invention.

### DETAILED DESCRIPTION

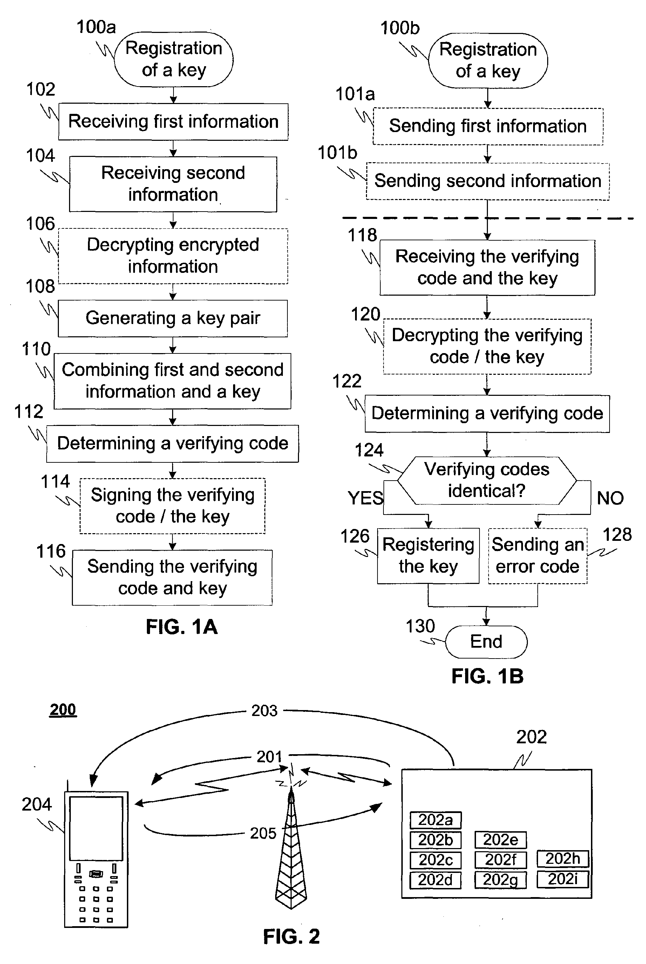

Figure 1A illustrates a flow chart of an exemplary method 100a for forming a registration request in a terminal (as a client) according to an advantageous embodiment of the invention, where at step 102 first information is received and at step 104 second information is received or alternatively gathered from the environment of the terminal. At step 106 encrypted parts of information are decrypted, if there are any encrypted information. At step 108 a PKI key pair including a private and public keys may be generated, if they are not already pre-generated beforehand either by the terminal or alternatively some other part. Now it should be noted that the order of steps 102-108 described here is only an example and the order may also be different, such as first receiving second information, next generating the key pair and after this receiving first information, for example, whereupon the step 108 could also be optional.

However, after the steps 102-108 said first (A) and second (B) information with the generated public key (PKI) is combined in certain way at step 110. The combination may be for example a string, such as [(A)(B)(PKI)], where (A) is first information, (B) second information and (PKI) the generated public key. The combination may also be any other combination such as a table and it may also comprise only part of information of first information (A), for example.

At step 112 a verifying code, such as a hash code, is determined over the combination of information and the key to be registered, and at step 114 the verifying code can be signed by the generated or pre-generated key, which public key to be registered is delivered to the registration server. However, the step 114 is optional. When the verifying code is determined, it is delivered advantageously with the public key to be registered to a registration server of a certification authority at step 116.

Figure 1B illustrates flow chart of an exemplary method 100b for registering a key in a registration server according to an advantageous embodiment of the invention, where at step 101 a first information and step 101b second information is sent to a terminal. These steps are however optional, because according to an embodiment of the invention also some other party may provide the terminal with said first and/or second information, and according to an embodiment of the invention said second information may also be information gathered by the terminal from it's environment. Moreover the order of the steps 101 a, 101 b may be different as described here.

After step 116 depicted in Figure 1A the verifying code and the key to be registered is received in step 118, after which the possible encryption of the verifying code and/or the key to be registered is decrypted, or the possible signature is verified at step 120. Also the step 120 is optional.

When the registration server has received said verifying code, the registration server determines at step 122 a verifying code also by itself using same first and second information as the terminal did with the public key received from the terminal. At step 124 verifying codes (the first one sent by the terminal and the second one determined by the registration server) are compared. If they are identical, the registration server can be sure that the public key to be registered is indeed from the terminal to which said first and second information were sent, whereupon the public key is registered at step 126 and the process is ended 130. If the verifying codes are not identical, an error code is advantageously sent to the terminal at step 128 (this is however optional) and the process ended 130.

Figure 2 illustrates a block diagram of an exemplary system 200 according to an advantageous embodiment of the invention for a key registration process in a WPKI environment comprising a registration server 202 being in data communication via a first data communication connection 201 with a terminal 204.

First information usable for forming a registration request is sent from the registration server 202 via said first data communication connection 201 to the terminal 204. Second information (or at least part of it) used for forming the registration request and known also by the registration server 202 is provided to the terminal 204 according to an embodiment of the invention via a second connection 203 separated from the first data communication connection 201. However, a transmission path used for second data can be same as used for first data, but first and second data is not sent during same connection.

A verifying code determined of said first and second information with a public key to be registered and the public key are delivered to the registration server 202 via a third communication connection 205, which is according to an embodiment of the invention a different connection than the connection 201 used for delivering said first information. However, a transmission path used for delivering the verifying code and the key can be same as used for first data.

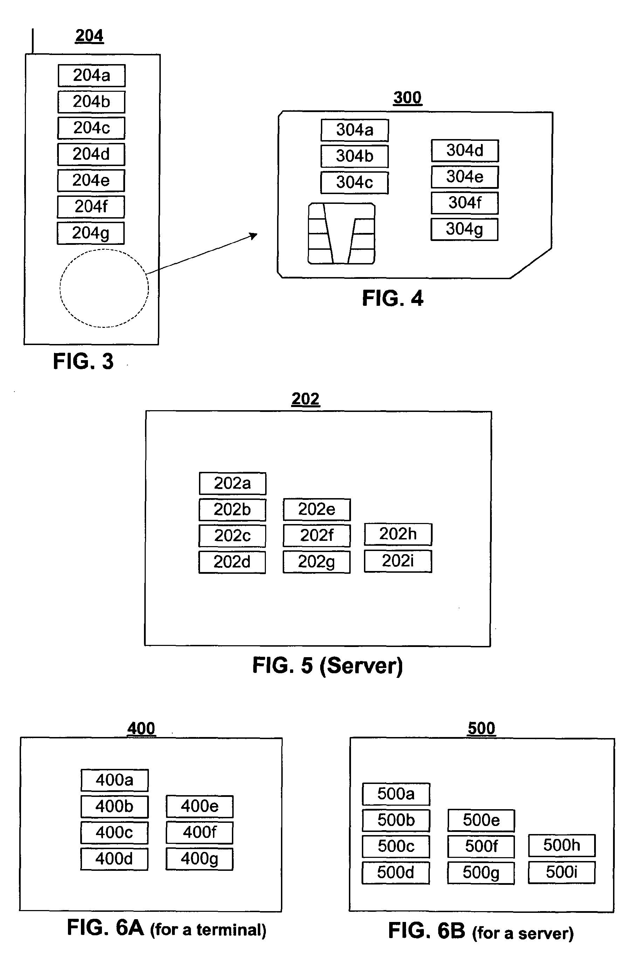

Figure 3 illustrates an exemplary terminal 204 for a key registration process in a WPKI environment according to an advantageous embodiment of the invention, where the terminal comprises means 204a for receiving first information and means 204b for receiving and/or gathering second information, where means 204b is according to an embodiment of the invention a keyboard, for example, especially when second information must be typed to the terminal. Moreover the terminal 204 comprises means 204c for encrypting, decrypting, signing and/or verifying signature of information, as well as means 204d for generating a PKI key pair including a private and public keys.

In addition the terminal 204 comprises means 204e for combining said first (A) and second (B) information with the generated public key (PKI) in certain way as depicted elsewhere in this document. The terminal comprises also means 204f for determining a verifying code, such as a hash code, of the combination of information and the key to be registered, and means 204g for delivering the verifying code advantageously with the public key to be registered to a registration server of a certification authority.

Figure 4 illustrates an exemplary SIM/UICC-card 300 used in a terminal 204 of Figure 2 for a key registration process in a WPKI environment according to an advantageous embodiment of the invention, where at least part of the functionality of terminal 204 can be performed with the SIM/UICC-card 300. The SIM/UICC-card 300 comprises according to an embodiment of the invention at least one of the following means: means 304a for receiving first information, means 304b for receiving and/or gathering second information for example from the keyboard or other I/O-means, means 304c for encrypting, decrypting signing, and/or verifying a signature of information, as well as means 304d for generating a PKI key pair including a private and public keys, means 304e for combining said first (A) and second (B) information with the generated public key (PKI) in certain way as depicted elsewhere in this document, means 304f for determining a verifying code, and means 304g for outputting the verifying code advantageously with the public key to be delivered to a registration server of a certification authority.

Figure 5 illustrates a block diagram of an exemplary registration server 202 for registering a key according to an advantageous embodiment of the invention, where the registration server 202 comprises means 202a for sending and generating first information and means 202b for sending and generating second information or at least part of it. Moreover the registration server 202 comprises means 202c for receiving a verifying code and the key to be registered, as well as means 202d for decrypting, encrypting, signing and/or verifying a signature of information.

In addition the registration server 202 comprises means 202e for combining said first (A) and second (B) information with the received public key (PKI) in certain way as depicted elsewhere in this document, as well as means 202f for determining a verifying code using first (A) and second (B) information with the received public key (PKI) in similar way as the terminal did. Furthermore the registration server 202 comprises means 202g for comparing the verifying codes (the first one sent by the terminal and the second one determined by the registration server) so that if they are identical, the registration server is adapted to register the public key using means 202h, or otherwise adapted to send an error code using means 202i.

Figure 6A illustrates a block diagram of an exemplary computer program product 400 for a terminal for forming a registration request in a terminal according to an advantageous embodiment of the invention. The computer program product 400 comprises following means 400a-400g, where means 404a is adapted to receive first information, means 404b adapted to receive and/or gather second information for example from the keyboard or other I/O-means, means 404c adapted to encrypt, decrypt, sign and/or verify a signature of information, as well as means 404d adapted to generate a PKI key pair including a private and public keys, means 404e adapted to combine said first (A) and second (B) information with the generated public key (PKI) in certain way as depicted elsewhere in this document, means 404f adapted to determine a verifying code, and means 404g adapted to output the verifying code advantageously with the public key to be delivered to a registration server of a certification authority, when the computer program product is run on a data processing means, such as a terminal 204 illustrated in Figure 4, or SIM/UICC-card illustrated in Figure 4 or other data processing means, such as a laptop computer.

Figure 6B illustrates a block diagram of an exemplary computer program product 500 for registering a key in a registration server according to an advantageous embodiment of the invention. The computer program product 500 comprises following means 500a-500i, where means 502a is adapted to send and generate first information, means 502b adapted to send and generate second information or at least part of it, means 502c adapted to receive a verifying code and the key to be registered, as well as means 502d adapted to decrypt, encrypt, sign and/or verify a signature of information, means 502e adapted to combine said first (A) and second (B) information with the received public key (PKI) in certain way as depicted elsewhere in this document, as well as means 502f adapted to determine a verifying code using first (A) and second (B) information with the received public key (PKI) in similar way as the terminal did, means 502g adapted to compare the verifying codes (the first one sent by the terminal and the second one determined by the computer program product itself) so that if they are identical, the computer program product is adapted to register the public key using means 502h, or otherwise adapted to send an error code using means 502i, when said computer program product is run on a data processing means, such as a registration server 202 illustrated in Figure 5.

The invention has now been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

Even if the delivery of a public key is described in this document, it should be noted that only information relating to the public key and essential for registering said key in the registration server may be sufficient in certain situations, whereupon the whole key is not necessary to deliver. In addition it should be noted that even if it said in this document that a public key to be registered is delivered to a registration server, it could also be enough in a certain situation to deliver only relevant parts of said public key.

## Claims

1. A method (100a, 100b) for a secure PKI (Public Key Infrastructure) key registration process in a WPKI (Wireless PKI) environment (200), where the WPKI environment comprises a registration server (202) being in data communication via a first data communication connection (201) with a client (204) provided with a key pair, and where a registration request for a public key of said key pair is provided to said registration server (202), **characterized in that**
a) first information usable for forming the registration request is sent from said registration server (202) via said first data communication connection (201) to said client (204), where at least part of said information is encrypted before sending it from said server to said client,
b) said client (204) is provided with second information used for forming the registration request and known by the registration server (202),
c) encrypted part of said first information is decrypted (106) by said client (204),
d) the registration request is formed combining in a certain way known also by the registration server said second information, at least part of said first information, and a public key of said key pair to be registered to a registration request form, and a verifying code is determined (112) using at least part of said request form, and
e) at least said verifying code and public key to be registered are delivered (116) to said registration server (202) via a third communication connection (205), whereupon the registration server (202) also determines (122) a verifying code from the combination of said second information known by said server, used part of said first information and the public key to be registered, and compares (124) the verifying code determined by it to the verifying code received from the client, and registers (126) said public key received from the client if the verifying codes are identical with each other.

2. A method according to claim 1, wherein at least part of said second information is provided (101b) to the client (204) via a second connection (203) separated from said first data communication connection (201), or wherein at least part of said second information is information gathered from the environment of the client (204).

3. A method according to claim 1 or 2, wherein said second information used for forming the registration request is transmitted from the client (204) to the registrations server (202) on the third communication connection (205), if said second information is not known to the registrations server beforehand.

4. A method according to any of previous claims, wherein the key pair is generated by the client (204), or the key pair is pre-generated outside the client (204).

5. A method according to any of previous claims, wherein said first information is a random character string, proof of possession, user-specific information or combination of these, and comprises a greater number of characters as said second information.

6. A method according to claims 1 or 2, wherein said second information is proof of possession.

7. A method according to any of previous claims, wherein said verifying code is signed by the private key of the key pair which public key is delivered to the registration server (202) for registering.

8. A method according to any of previous claims, wherein a certain time window is triggered during which the verifying code and the public key to be registered must be received in the registration server (202) in order to be registered.

9. A system (200) for a secure PKI (Public Key Infrastructure) key registration process in a WPKI (Wireless PKI) environment, where the WPKI environment comprises a registration server (202) being in data communication via a first data communication connection (201) with a client (204) provided with a key pair, and where a registration request for a public key of said key pair is provided to said registration server (202), **characterized in that**
- the system is adapted to generate and send (202a) first information usable for forming the registration request to said client (204) via said first data communication connection (201), where at least part of said information is encrypted before sending it to said client (204),
- the system is adapted to provide (202b) said client (204) with second information used for forming the registration request and known by the registration server (202),
- the system is adapted to decrypt (202d) the encrypted part of said first information,
- the system is adapted to form (204e) the registration request combining in a certain way known also by the registration server said second information, at least part of said first information, and a public key of said key pair to be registered to a registration request form, and further adapted to determine (204f) a verifying code using at least part of said request form, and
- the system is adapted to deliver (204g) at least said verifying code and public key to be registered to said registration server (202) via a third communication connection (205), whereupon the system is also adapted to determine (202f) a verifying code from the combination of said first and second information known by said server (202) and used by the client (204) for determining the verifying code and the public key to be registered, and compare (202g) the determined verifying code to the verifying code determined by the client, and register (202h) said public key received from the client if the verifying codes are identical with each other.

10. A system according to claim 9, wherein at least part of said second information is provided to the client (202) via a second connection (203) separated from said first data communication connection (201), or wherein at least part of said second information is information gathered from the environment of the client (204).

11. A registration server (202) for a secure PKI (Public Key Infrastructure) key registration process in a WPKI (Wireless PKI) environment (200), where the WPKI environment comprises in addition to the registration server (202) a client (204) provided with a key pair and being in data communication via a first data communication connection (201) with the registration server (202), and where a registration request for a public key of said key pair is provided to said registration server (202), **characterized in that**
- the registration server is provided with first and second information usable for forming the registration request by the client (204),
- the registration server is adapted to receive (202c) at least a verifying code formed by the client (204) and a public key to be registered via a third communication connection (205) from the client (204), and
- the registration server is also adapted to determine (202f) a verifying code from the combination of said first and second information used by the client for determining the verifying code and the public key to be registered, and compare (202g) the verifying code determined by it to the verifying code determined by the client, and register (202h) said public key received from the client if the verifying codes are identical with each other.

12. A registration server according to claim 11, wherein the registration server is further adapted to
- generate and send (202a) said first information usable for forming the registration request via said first data communication connection (201) to said client (204), where at least part of said information is encrypted before sending, and/or
- generate and send (202b) at least part of said second information used for forming the registration request to said client (204) via a second connection (203) separated from said first data communication connection (201).

13. A client (204) for a secure PKI (Public Key Infrastructure) key registration process in a WPKI (Wireless PKI) environment (200), where the client is provided with a key pair and the WPKI environment comprises also a registration server (202) being in data communication via a first data communication connection (201) with said client (204), and where a registration request for a public key of said key pair is provided to said registration server (202), **characterized in that** the
- client is adapted to receive (204a) first information usable for forming the registration request via said first data communication connection (201), where at least part of said information is encrypted,
- client is adapted to use (204e) second information for forming the registration request, said second information being also known by the registration server,
- client is adapted to decrypt (204c) the encrypted part of said first information,
- client is adapted to form (204e) the registration request combining in a certain way known also by the registration server said second information, at least part of said first information, and a public key of said key pair to be registered to a registration request, and further adapted to determine (204f) a verifying code using at least part of said request form, and
- client is adapted to deliver (204g) at least said verifying code and said public key to said registration server via a third communication connection (205) in order to be registered.

14. A computer program product (400) for a secure WPKI (Public Key Infrastructure) key registration process in a WPKI (Wireless PKI) environment, where the WPKI environment comprises a registration server (202) being in data communication via a first data communication connection (201) with a client (204) provided with a key pair, and where a registration request for a public key of said key pair is provided to said registration server (202), **characterized in that** said computer program product (400) is adapted to
- receive (404a) first information usable for forming the registration request via said first data communication connection (201), where at least part of said information is encrypted, and second information usable for forming the registration request, said second information being also known by the registration server (202)
- decrypt (404c) the encrypted part of said first information,
- form (404e) the registration request combining in a certain way known also by the registration server said second information, at least part of said first information, and a public key of said key pair to be registered to a registration request form, and further adapted to determine (404f) a verifying code using at least part of said request form, and
- output (404g) the verifying code with the generated public key to be delivered to the registration server (202)
when said computer program product (400) is run by the client (204).

15. A computer program product (500) for a secure PKI (Public Key Infrastructure) key registration process in a WPKI (Wireless PKI) environment, where the WPKI environment comprises a registration server (202) being in data communication via a first data communication connection (201) with a client (204) provided with a key pair, and where a registration request for a public key of said key pair is provided to said registration server (202), **characterized in that** said computer program product (500) is adapted to
- be provided with first and second information usable for forming the registration request by the client,
- receive (502c) at least a verifying code formed by the client and a public key to be registered, and
- determine (502f) a verifying code from the combination of said first and second information used by the client for determining the verifying code and the public key to be registered, and compare (502g) the verifying code determined by it to the verifying code determined by the client, and register (502h) said public key received from the client if the verifying codes are identical with each other
when said computer program product (500) is run on a computer in the registration server (202) end.

## Patentansprüche

1. Verfahren (100a, 100b) für ein sicheres WPKI (Public Key Infrastructure)-Schlüsselregistrierungsverfahren in einer WPKI (drahtlosen PKI)-Umgebung (200), wobei die WPKI-Umgebung einen Registrierungsserver (202) umfasst, der in Datenkommunikation über eine erste Datenkommunikationsverbindung (201) mit einem Client (204) ist, der mit einem Schlüsselpaar ausgestattet ist, und wobei dem Registrierungsserver (202) eine Registrierungsanfrage nach einem öffentlichen Schlüssel des Schlüsselpaars bereitgestellt wird, **dadurch gekennzeichnet, dass**
a) erste Informationen, die zur Bildung der Registrierungsanfrage brauchbar sind, von dem Registrierungsserver (202) über die erste Datenkommunikationsverbindung (201) an den Client (204) gesendet werden, wobei mindestens ein Teil der Informationen verschlüsselt wird, bevor sie von dem Server an den Client gesendet werden,
b) der Client (204) mit zweiten Informationen ausgestattet wird, die zur Bildung der Registrierungsanfrage verwendet werden und dem Registrierungsserver (202) bekannt sind,
c) der verschlüsselte Teil der ersten Informationen durch den Client (204) entschlüsselt (106) wird,
d) die Registrierungsanfrage gebildet wird, wobei in einer bestimmten Weise, die dem Registrierungsserver ebenfalls bekannt ist, die zweiten Informationen, mindestens ein Teil der ersten Informationen und ein öffentlicher Schlüssel des Schlüsselpaars zur Registrierung zu einem Registrierungsanfrageformular kombiniert werden und unter Verwendung mindestens eines Teils des Anfrageformulars ein Verifizierungscode bestimmt (112) wird, und
e) mindestens der Verifizierungscode und der öffentliche Schlüssel zur Registrierung dem Registrierungssserver (202) über eine dritte Kommunikationsverbindung (205) geliefert (116) werden, woraufhin der Registrierungsserver (202) auch einen Verifizierungscode aus der Kombination der zweiten Informationen, die dem Server bekannt sind, dem verwendeten Teil der ersten Informationen und dem öffentlichen Schlüssel zur Registrierung bestimmt (122) und den durch ihn bestimmten Verifizierungscode mit dem von dem Client empfangenen Verifizierungscode vergleicht (124) und den von dem Client empfangenen öffentlichen Schlüssel registriert (126), wenn die Verifizierungscodes miteinander identisch sind.

2. Verfahren nach Anspruch 1, wobei mindestens ein Teil der zweiten Informationen dem Client (204) über eine zweite Verbindung (203), die von der ersten Datenkommunikationsverbindung (201) separat ist, bereitgestellt (101b) wird oder wobei mindestens ein Teil der zweiten Informationen Informationen sind, die aus der Umgebung des Clients (204) zusammengetragen wurden.

3. Verfahren nach Anspruch 1 oder 2, wobei die zur Bildung der Registrierungsanfrage verwendeten zweiten Informationen von dem Client (204) zu dem Registrierungsserver (202) auf der dritten Kommunikationsverbindung (205) übertragen werden, falls die zweiten Informationen dem Registrierungsserver zuvor nicht bekannt waren.

4. Verfahren nach einem der vorhergehenden Ansprüche, wobei das Schlüsselpaar durch den Client (204) generiert wird oder das Schlüsselpaar außerhalb des Clients (204) prägeneriert worden ist.

5. Verfahren nach einem der vorhergehenden Ansprüche, wobei die ersten Informationen eine statistische Zeichenkette, Eigentumsnachweis, benutzerspezifische Informationen oder eine Kombination hiervon sind und eine größere Anzahl von Zeichen als die zweiten Informationen umfassen.

6. Verfahren nach Anspruch 1 oder 2, wobei die zweiten Informationen Eigentumsnachweis sind.

7. Verfahren nach einem der vorhergehenden Ansprüche, wobei der Verifizierungscode durch den privaten Schlüssel des Schlüsselpaares signiert ist, dessen öffentlicher Schlüssel dem Registrierungsserver (202) zur Registrierung geliefert wird.

8. Verfahren nach einem der vorhergehenden Ansprüche, wobei ein bestimmtes Zeitfenster ausgelöst wird, in dem der Verifizierungscode und der öffentliche Schlüssel zur Registrierung von dem Registrierungsserver (202) empfangen worden sein müssen, um registriert zu werden.

9. System (200) für ein sicheres WPKI (Public Key Infrastructure)-Schlüsselregistrierungsverfahren in einer WPKI (drahtlosen PKI)-Umgebung, wobei die WPKI-Umgebung einen Registrierungsserver (202) umfasst, der in Datenkommunikation über eine erste Datenkommunikationsverbindung (201) mit einem Client (204) ist, der mit einem Schlüsselpaar ausgestattet ist, und wobei dem Registrierungsserver (202) eine Registrierungsanfrage nach einem öffentlichen Schlüssel des Schlüsselpaars bereitgestellt wird, **dadurch gekennzeichnet, dass**
- das System adaptiert ist zum Generieren und Senden (202a) von ersten Informationen, die zur Bildung der Registrierungsanfrage brauchbar sind, über die erste Datenkommunikationsverbindung (201) an den Client (204), wobei mindestens ein Teil der Informationen verschlüsselt wird, bevor sie zu dem Client (204) gesendet werden,
- das System adaptiert ist zum Bereitstellen (202b) der zweiten Informationen an den Client (204), die zur Bildung der Registrierungsanfrage verwendet werden und dem Registrierungsserver (202) bekannt sind,
- das System adaptiert ist zum Entschlüsseln (202d) des verschlüsselten Teil der ersten Informationen,
- das System adaptiert ist zum Bilden (204e) der Registrierungsanfrage, indem in einer bestimmten Weise, die dem Registrierungsserver ebenfalls bekannt ist, die zweiten Informationen, mindestens ein Teil der ersten Informationen und ein öffentlicher Schlüssel des Schlüsselpaars zur Registrierung zu einem Registrierungsanfrageformular kombiniert werden, und ferner adaptiert ist zum Bestimmen (204f) eines Verifizierungscodes unter Verwendung mindestens eines Teils des Anfrageformulars, und
- das System adaptiert ist zum Liefern (204g) mindestens des Verifizierungscode und des öffentlichen Schlüssels zur Registrierung an den Registrierungsserver (202) über eine dritte Kommunikationsverbindung (205), woraufhin das System ebenfalls adaptiert ist zum Bestimmen (202f) eines Verifizierungscodes aus der Kombination der ersten und zweiten Informationen, die dem Server (202) bekannt sind und von dem Client (204) zum Bestimmen des Verifizierungscodes und des öffentlichen Schlüssels zur Registrierung verwendet werden, und zum Registrieren (202h) des von dem Client empfangenen öffentlichen Schlüssels, wenn die Verifizierungscodes miteinander identisch sind.

10. System nach Anspruch 9, wobei mindestens ein Teil der zweiten Informationen dem Client (202) über eine zweite Verbindung (203), die von der ersten Datenkommunikationsverbindung (201) separat ist, bereitgestellt wird oder wobei mindestens ein Teil der zweiten Informationen Informationen sind, die aus der Umgebung des Clients (204) zusammengetragen wurden.

11. Registrierungsserver (202) für ein sicheres WPKI (Public Key Infrastructure)-Schlüsselregistrierungsverfahren in einer WPKI (drahtlosen PKI)-Umgebung (200), wobei die WPKI-Umgebung zusätzlich zu dem Registrierungsserver (202) einen Client (204) umfasst, der mit einem Schlüsselpaar ausgestattet ist und in Datenkommunikation über eine erste Datenkommunikationsverbindung (201) mit dem Registrierungsserver (202) ist, und wobei dem Registrierungssserver (202) eine Registrierungsanfrage nach einem öffentlichen Schlüssel des Schlüsselpaars bereitgestellt wird, **dadurch gekennzeichnet, dass**
- dem Registrierungsserver erste und zweite Informationen, die zur Bildung der Registrierungsanfrage brauchbar sind, durch den Client (204) bereitgestellt werden,
- der Registrierungsserver adaptiert ist zum Empfangen (202c) von mindestens einem durch den Client (204) gebildeten Verifizierungscode und einem öffentlichen Schlüssel zur Registrierung über eine dritte Kommunikationsverbindung (205) von dem Client (204), und
- der Registrierungsserver ebenfalls adaptiert ist zum Bestimmen (202f) eines Verifizierungscodes aus der Kombination der ersten und zweiten Informationen, die von dem Client zum Bestimmen des Verifizierungscodes und des öffentlichen Schlüssels zur Registrierung verwendet werden, und zum Vergleichen (202g) des von ihm bestimmten Verifizierungscodes mit dem von dem Client bestimmten Verifizierungscode und zum Registrieren (202h) des von dem Client empfangenen öffentlichen Schlüssels, wenn die Verifizierungscodes miteinander identisch sind.

12. Registrierungsserver nach Anspruch 11, wobei der Registrierungsserver ferner für Folgendes adaptiert ist:
- Generieren und Senden (202a) der ersten Informationen, die zur Bildung der Registrierungsanfrage brauchbar sind, über die erste Datenkommunikationsverbindung (201) an den Client (204), wobei mindestens ein Teil der Informationen vor dem Senden verschlüsselt wird, und/oder
- Generieren und Senden (202b) mindestens eines Teils der zweiten Informationen, die zum Bilden der Registrierungsanfrage verwendet worden sind, an den Client (204) über eine zweite Verbindung (203), die separat von der ersten Datenkommunikationsverbindung (201) ist.

13. Client (204) für ein sicheres WPKI (Public Key Infrastructure)-Schlüsselregistrierungsverfahren in einer WPKI (drahtlosen PKI)-Umgebung (200), wobei der Client mit einem Schlüsselpaar ausgestattet ist und die WPKI-Umgebung auch einen Registrierungsserver (202) umfasst, der in Datenkommunikation über eine erste Datenkommunikationsverbindung (201) mit einem Client (204) ist, und wobei dem Registrierungsserver (202) eine Registrierungsanfrage nach einem öffentlichen Schlüssel des Schlüsselpaars bereitgestellt wird, **dadurch gekennzeichnet, dass**
- der Client adaptiert ist zum Empfangen (204a) von ersten Informationen, die zur Bildung der Registrierungsanfrage brauchbar sind, über die erste Datenkommunikationsverbindung (201), wobei mindestens ein Teil der Informationen verschlüsselt ist,
- der Client adaptiert ist zum Verwenden (204e) zweiter Informationen zur Bildung der Registrierungsanfrage, wobei die zweiten Informationen dem Registrierungsserver ebenfalls bekannt sind,
- der Client adaptiert ist zum Entschlüsseln (204c) des verschlüsselten Teils der ersten Informationen,
- der Client adaptiert ist zum Bilden (204e) der Registrierungsanfrage, indem in einer bestimmten Weise, die dem Registrierungsserver ebenfalls bekannt ist, die zweiten Informationen, mindestens ein Teil der ersten Informationen und ein öffentlicher Schlüssel des Schlüsselpaars zur Registrierung zu einem Registrierungsanfrageformular kombiniert werden, und ferner adaptiert ist zum Bestimmen (204f) eines Verifizierungscodes unter Verwendung von mindestens einem Teil des Anfrageformulars, und
- der Client adaptiert ist zum Liefern (204g) mindestens des Verifizierungscodes und des öffentlichen Schlüssels über eine dritte Kommunikationsverbindung (205) an den Registrierungsserver, um registriert zu werden.

14. Computerprogrammprodukt (400) für ein sicheres WPKI (Public Key Infrastructure)-Schlüsselregistrierungsverfahren in einer WPKI (drahtlosen PKI)-Umgebung, wobei die WPKI-Umgebung einen Registrierungsserver (202) umfasst, der in Datenkommunikation über eine erste Datenkommunikationsverbindung (201) mit einem Client (204) ist, der mit einem Schlüsselpaar ausgestattet ist, und wobei dem Registrierungsserver (202) eine Registrierungsanfrage für einen öffentlichen Schlüssel des Schlüsselpaars bereitgestellt wird, **dadurch gekennzeichnet, dass** das Computerprogrammprodukt (400) für Folgendes adaptiert ist:
- Empfangen (404a) von ersten Informationen, die zur Bildung der Registrierungsanfrage über die erste Datenkommunikationsverbindung (201) brauchbar sind, wobei mindestens ein Teil der Informationen verschlüsselt ist, und zweiten Informationen, die zur Bildung der Registrierungsanfrage brauchbar sind, wobei die zweiten Informationen dem Registrierungsserver (202) ebenfalls bekannt sind,
- Entschlüsseln (404c) des verschlüsselten Teils der ersten Informationen,
- Bilden (404e) der Registrierungsanfrage, indem in einer bestimmten Weise, die dem Registrierungsserver ebenfalls bekannt ist, mindestens ein Teil der ersten Informationen und ein öffentlicher Schlüssel des Schlüsselpaars zur Registrierung zu einem Registrierungsanfrageformular kombiniert werden, und ferner adaptiert ist zum Bestimmen (404f) eines Verifizierungscodes unter Verwendung von mindestens eines Teils des Anfrageformulars, und
- Ausgeben (404g) des Verifizierungscodes mit dem generierten öffentlichen Schlüssels, der an den Registrierungsserver (202) geliefert werden soll,
wenn das Computerprogrammprodukt (400) durch den Client (204) ausgeführt wird.

15. Computerprogrammprodukt (500) für ein sicheres WPKI (Public Key Infrastructure)-Schlüsselregistrierungsverfahren in einer WPKI (drahtlosen PKI)-Umgebung, wobei die WPKI-Umgebung einen Registrierungsserver (202) umfasst, der in Datenkommunikation über eine erste Datenkommunikationsverbindung (201) mit einem Client (204) ist, der mit einem Schlüsselpaar ausgestattet ist, und wobei dem Registrierungsserver (202) eine Registrierungsanfrage für einen öffentlichen Schlüssel des Schlüsselpaars bereitgestellt wird, **dadurch gekennzeichnet, dass** das Computerprogrammprodukt (500) für Folgendes adaptiert ist:
- mit ersten und zweiten Informationen ausgestattet zu werden, die zur Bildung der Registrierungsanfrage durch den Client brauchbar sind,
- Empfangen (502c) mindestens eines Verifizierungscodes, der durch den Client gebildet ist, und eines öffentlichen Schlüssels zur Registrierung und
- Bestimmen (502f) eines Verifizierungscodes aus der Kombination der ersten und zweiten Informationen, die von dem Client zum Bestimmen des Verifizierungscodes und des öffentlichen Schlüssels zur Registrierung verwendet werden, und Vergleichen (502g) des von ihm bestimmten Verifizierungscodes mit dem von dem Client bestimmten Verifizierungscode und Registrieren (502h) des von dem Client empfangenen öffentlichen Schlüssels, wenn die Verifizierungscodes miteinander identisch sind,
wenn das Computerprogrammprodukt (500) auf einem Computer auf der Seite des Registrierungsservers (202) ausgeführt wird.

## Revendications

1. Procédé (100a, 100b) permettant un processus d'enregistrement de clés WPKI (infrastructure à clé publique) sécurisé dans un environnement WPKI (PKI sans fil) (200), l'environnement WPKI comprenant un serveur d'enregistrement (202) en communication de données par l'intermédiaire d'une première connexion de communication de données (201) avec un client (204) doté d'une paire de clés, et une requête d'enregistrement pour une clé publique de ladite paire de clés étant fournie au dit serveur d'enregistrement (202), **caractérisé en ce que**
a) des premières informations utilisables pour former la requête d'enregistrement sont envoyées à partir dudit serveur d'enregistrement (202) par l'intermédiaire de ladite première connexion de communication de données (201) au dit client (204), au moins une partie desdites informations étant cryptée avant son envoi depuis ledit serveur au dit client,
b) ledit client (204) recevant des deuxièmes informations utilisées pour former la requête d'enregistrement et connues du serveur d'enregistrement (202),
c) une partie cryptée desdites premières informations est décryptée (106) par ledit client (204),
d) la requête d'enregistrement est formée en combinant d'une certaine façon connue également du serveur d'enregistrement lesdites deuxièmes informations, au moins une partie desdites premières informations, et une clé publique de ladite paire de clés devant être enregistrée dans un formulaire de requête d'enregistrement, et un code de vérification est déterminé (112) en utilisant au moins une partie dudit formulaire de requête, et
e) au moins ledit code de vérification et ladite clé publique devant être enregistrée sont délivrés (116) au dit serveur d'enregistrement (202) par l'intermédiaire d'une troisième connexion de communication (205), le serveur d'enregistrement (202) déterminant également (122) un code de vérification à partir de la combinaison desdites deuxièmes informations connues dudit serveur, de la partie utilisée desdites premières informations et de la clé publique devant être enregistrée, et comparant (124) le code de vérification qu'il a déterminé au code de vérification reçu à partir du client, et enregistrant (126) ladite clé publique reçue à partir du client si les codes de vérification sont identiques.

2. Procédé selon la revendication 1, dans lequel au moins une partie desdites deuxièmes informations est fournie (101b) au client (204) par l'intermédiaire d'une deuxième connexion (203) séparée de ladite première connexion de communication de données (201), ou au moins une partie desdites deuxièmes informations étant des informations recueillies à partir de l'environnement du client (204).

3. Procédé selon la revendication 1 ou 2, dans lequel lesdites deuxièmes informations utilisées pour former la requête d'enregistrement sont transmises depuis le client (204) au serveur d'enregistrement (202) sur la troisième connexion de communication (205), si lesdites deuxièmes informations ne sont pas connues préalablement du serveur d'enregistrement.

4. Procédé selon l'une quelconque des revendications précédentes, dans lequel la paire de clés est générée par le client (204), ou la paire de clés est pré-générée à l'extérieur du client (204).

5. Procédé selon l'une quelconque des revendications précédentes, dans lequel lesdites premières informations sont une chaîne de caractères aléatoires, une preuve de possession, des informations spécifiques à l'utilisateur ou une combinaison de ces éléments, et comprennent un nombre de caractères plus grand que lesdites deuxièmes informations.

6. Procédé selon les revendications 1 ou 2, dans lequel lesdites deuxièmes informations sont une preuve de possession.

7. Procédé selon l'une quelconque des revendications précédentes, dans lequel ledit code de vérification est signé par la clé privée de la paire de clés dont la clé publique est délivrée au serveur d'enregistrement (202) pour être enregistrée.

8. Procédé selon l'une quelconque des revendications précédentes, dans lequel une certaine fenêtre de temps est déclenchée durant laquelle le code de vérification et la clé publique devant être enregistrée doivent être reçus dans le serveur d'enregistrement (202) pour être enregistrés.

9. Système (200) permettant un processus d'enregistrement de clés WPKI (infrastructure à clé publique) sécurisé dans un environnement WPKI (PKI sans fil), l'environnement WPKI comprenant un serveur d'enregistrement (202) en communication de données par l'intermédiaire d'une première connexion de communication de données (201) avec un client (204) doté d'une paire de clés, et une requête d'enregistrement pour une clé publique de ladite paire de clés étant fournie au dit serveur d'enregistrement (202), **caractérisé en ce que**
- le système est conçu pour générer et envoyer (202a) des premières informations utilisables pour former la requête d'enregistrement au dit client (204) par l'intermédiaire de ladite première connexion de communication de données (201), au moins une partie desdites informations étant cryptée avant son envoi au dit client (204),
- le système est conçu pour fournir (202b) au dit client (204) des deuxièmes informations utilisées pour former la requête d'enregistrement et connues du serveur d'enregistrement (202),
- le système est conçu pour décrypter (202d) la partie cryptée desdites premières informations,
- le système est conçu pour former (204e) la requête d'enregistrement en combinant d'une certaine façon connue également du serveur d'enregistrement lesdites deuxièmes informations, au moins une partie desdites premières informations, et une clé publique de ladite paire de clés devant être enregistrée dans un formulaire de requête d'enregistrement, et est conçu en outre pour déterminer (204f) un code de vérification en utilisant au moins une partie dudit formulaire de requête, et
- le système est conçu pour délivrer (204g) au moins ledit code de vérification et ladite clé publique devant être enregistrée au dit serveur d'enregistrement (202) par l'intermédiaire d'une troisième connexion de communication (205), le système étant également conçu pour déterminer (202f) un code de vérification à partir de la combinaison desdites premières et deuxièmes informations connues dudit serveur (202) et utilisées par le client (204) pour déterminer le code de vérification et la clé publique devant être enregistrée, et comparer (202g) le code de vérification déterminé au code de vérification déterminé par le client, et enregistrer (202h) ladite clé publique reçue à partir du client si les codes de vérification sont identiques.

10. Système selon la revendication 9, dans lequel au moins une partie desdites deuxièmes informations est fournie au client (202) par l'intermédiaire d'une deuxième connexion (203) séparée de ladite première connexion de communication de données (201), ou au moins une partie desdites deuxièmes informations étant des informations recueillies à partir de l'environnement du client (204).

11. Serveur d'enregistrement (202) permettant un processus d'enregistrement de clés WPKI (infrastructure à clé publique) sécurisé dans un environnement WPKI (PKI sans fil) (200), l'environnement WPKI comprenant outre le serveur d'enregistrement (202) un client (204) doté d'une paire de clés et en communication de données par l'intermédiaire d'une première connexion de communication de données (201) avec le serveur d'enregistrement (202), et une requête d'enregistrement pour une clé publique de ladite paire de clés étant fournie au dit serveur d'enregistrement (202), **caractérisé en ce que**
- le serveur d'enregistrement dispose de premières et de deuxièmes informations utilisables pour former la requête d'enregistrement par le client (204),
- le serveur d'enregistrement est conçu pour recevoir (202c) au moins un code de vérification formé par le client (204) et une clé publique devant être enregistrée par l'intermédiaire d'une troisième connexion de communication (205) à partir du client (204), et
- le serveur d'enregistrement est également conçu pour déterminer (202f) un code de vérification à partir de la combinaison desdites premières et deuxièmes informations utilisées par le client pour déterminer le code de vérification et la clé publique à enregistrer, et comparer (202g) le code de vérification qu'il a déterminé au code de vérification déterminé par le client, et enregistrer (202h) ladite clé publique reçue à partir du client si les codes de vérification sont identiques.

12. Serveur d'enregistrement selon la revendication 11, dans lequel le serveur d'enregistrement est en outre conçu pour :
- générer et envoyer (202a) lesdites premières informations utilisables pour former la requête d'enregistrement par l'intermédiaire de ladite première connexion de communication de données (201) au dit client (204), au moins une partie desdites informations étant cryptée avant son envoi, et/ou
- générer et envoyer (202b) au moins une partie desdites deuxièmes informations utilisées pour former la requête d'enregistrement au dit client (204) par l'intermédiaire d'une deuxième connexion (203) séparée de ladite première connexion de communication de données (201).

13. Client (204) permettant un processus d'enregistrement de clés WPKI (infrastructure à clé publique) sécurisé dans un environnement WPKI (PKI sans fil) (200), le client étant doté d'une paire de clés et l'environnement WPKI comprenant également un serveur d'enregistrement (202) en communication de données par l'intermédiaire d'une première connexion de communication de données (201) avec ledit client (204), et une requête d'enregistrement pour une clé publique de ladite paire de clés étant fournie au dit serveur d'enregistrement (202), **caractérisé en ce que**
- le client est conçu pour recevoir (204a) des premières informations utilisables pour former la requête d'enregistrement par l'intermédiaire de ladite première connexion de communication de données (201), au moins une partie desdites informations étant cryptée,
- le client étant conçu pour utiliser (204e) des deuxièmes informations pour former la requête d'enregistrement, lesdites deuxièmes informations étant également connues du serveur d'enregistrement,
- le client est conçu pour décrypter (204c) la partie cryptée desdites premières informations,
- le client est conçu pour former (204e) la requête d'enregistrement en combinant d'une certaine façon connue également du serveur d'enregistrement lesdites deuxièmes informations, au moins une partie desdites premières informations, et une clé publique de ladite paire de clés devant être enregistrée dans une requête d'enregistrement, et est conçu en outre pour déterminer (204f) un code de vérification en utilisant au moins une partie dudit formulaire de requête, et
- le client est conçu pour délivrer (204g) au moins ledit code de vérification et ladite clé publique au dit serveur d'enregistrement par l'intermédiaire d'une troisième connexion de communication (205) pour son enregistrement.

14. Produit programme d'ordinateur (400) permettant un processus d'enregistrement de clés WPKI (infrastructure à clé publique) sécurisé dans un environnement WPKI (PKI sans fil), l'environnement WPKI comprenant un serveur d'enregistrement (202) en communication de données par l'intermédiaire d'une première connexion de communication de données (201) avec un client (204) doté d'une paire de clés, et une requête d'enregistrement pour une clé publique de ladite paire de clés étant fournie au dit serveur d'enregistrement (202), **caractérisé en ce que** ledit produit programme d'ordinateur (400) est conçu pour
- recevoir (404a) des premières informations utilisables pour former la requête d'enregistrement par l'intermédiaire de ladite première connexion de communication de données (201), au moins une partie desdites informations étant cryptée, et des deuxièmes informations utilisables pour former la requête d'enregistrement, lesdites deuxièmes informations étant également connues du serveur d'enregistrement (202)
- décrypter (404c) la partie cryptée desdites premières informations,
- former (404e) la requête d'enregistrement en combinant d'une certaine façon connue également du serveur d'enregistrement lesdites deuxièmes informations, au moins une partie desdites premières informations, et une clé publique de ladite paire de clés devant être enregistrée dans un formulaire de requête d'enregistrement, et conçu en outre pour déterminer (404f) un code de vérification en utilisant au moins une partie dudit formulaire de requête, et
- fournir (404g) le code de vérification avec la clé publique générée devant être délivrée au serveur d'enregistrement (202)
lorsque ledit produit programme d'ordinateur (400) est exécuté par le client (204).

15. Produit programme d'ordinateur (500) permettant un processus d'enregistrement de clés WPKI (infrastructure à clé publique) sécurisé dans un environnement WPKI (PKI sans fil), l'environnement WPKI comprenant un serveur d'enregistrement (202) en communication de données par l'intermédiaire d'une première connexion de communication de données (201) avec un client (204) doté d'une paire de clés, et une requête d'enregistrement pour une clé publique de ladite paire de clés étant fournie au dit serveur d'enregistrement (202), **caractérisé en ce que** ledit produit programme d'ordinateur (500) est conçu pour
- disposer de premières et de deuxièmes informations utilisables pour former la requête d'enregistrement par le client,
- recevoir (502c) au moins un code de vérification formé par le client et une clé publique devant être enregistrée, et
- déterminer (502f) un code de vérification à partir de la combinaison desdites premières et deuxièmes informations utilisées par le client pour déterminer le code de vérification et la clé publique à enregistrer, et comparer (502g) le code de vérification qu'il a déterminé au code de vérification déterminé par le client, et enregistrer (502h) ladite clé publique reçue à partir du client si les codes de vérification sont identiques
lorsque ledit produit programme d'ordinateur (500) est exécuté sur un ordinateur du côté serveur d'enregistrement (202).
